# EUROPÄISCHE PATENTSCHRIFT

(11) **EP 1 886 769 B1**
(45) Veröffentlichungstag und Bekanntmachung des Hinweises auf die Patenterteilung: **04.02.2009**
(21) Anmeldenummer: 07014557.8
(22) Anmeldetag: 25.07.2007
(51) Int. Cl.: B25F 5/00

(54) **Werkzeugmaschine mit mehrstufigem Planetengetriebe**
Machine tool with multi-stage planetary drive
Machine-outil dotée d'un train épicycloïdal à plusieurs niveaux

(30) Priorität: 09.08.2006 DE 102006037191
(43) Veröffentlichungstag der Anmeldung: 13.02.2008
(73) Patentinhaber: TTS Tooltechnic Systems AG & Co. KG, 73240 Wendlingen (DE)
(72) Erfinder: Fleischmann, Bernd, 73235 Weilheim (DE)
(74) Vertreter: Bregenzer, Michael

(56) Entgegenhaltungen:
- EP-A- 1 364 752
- GB-A- 1 404 063
- US-A1- 2006 021 771

## Beschreibung

Die Erfindung betrifft eine Werkzeugmaschine, insbesondere Handwerkzeugmaschine, beispielsweise Akkuschrauber oder Handbohrmaschine, gemäß dem Oberbegriff des Anspruchs 1.

Eine Werkzeugmaschine mit einem Planetengetriebe und einer Betätigungseinrichtung gemäß dem Oberbegriff des Anspruches ist beispielsweise aus der US 2006/0021771 A1 bekannt.

Bei einer aus der DE 102 22 824 A1 bekannten Werkzeugmaschine wird die Betätigungseinrichtung von einem in axialer Richtung verschiebbaren Schaltschieber gebildet, an dem eine Steuerkulisse ausgebildet ist. Der Steuerkulisse sind zwei jeweils einem von zwei Hohlrädern zugeordnete, schwenkbar gelagerte Schaltbügel zugeordnet, die einerseits ein die Steuerkulisse durchgreifendes Schaltteil aufweisen und andererseits mit dem betreffenden Hohlrad verbunden sind.

Ausgehend hiervon liegt der vorliegenden Erfindung die Aufgabe zugrunde, eine Werkzeugmaschine zu schaffen, die eine für den Benutzer bequem zu betätigende, wenig Platz in Anspruch nehmende Betätigungseinrichtung aufweist und deren Kopplungseinrichtung robust und störungsunanfällig ist. Ferner soll das der Erfindung zugrunde liegende Prinzip auch für Planetengetriebe mit verhältnismäßig vielen Schaltstellungskombinationen der Hohlräder geeignet sein.

Diese Aufgabe wird durch eine Werkzeugmaschine gemäß der technischen Lehre des Anspruchs 1 gelöst.

Da der Betätigungsring zum Schalten in einen anderen Gang lediglich verdreht wird, befindet er sich unabhängig von der jeweiligen Gangstellung stets an der gleichen Stelle, so dass sich eine platzsparende Anordnung ergibt. Ferner ist die Handhabung denkbar einfach. Während die Maschine mit der einen Hand gehalten wird, kann der Betätigungsring mit der anderen Hand gedreht werden.

Prinzipiell können auch mehr als zwei Stellelemente über den Umfang verteilt angeordnet sein, so dass die erfindungsgemäße Anordnung auch für Planetengetriebe mit mehr als zwei Hohlrädern ausgelegt werden kann. Ferner arbeiten die Stellelemente mit ihren Kulissenführungen unabhängig voneinander, so dass die Kulissenführungen praktisch jeden beliebigen Verlauf aufweisen können, was die erzielbare Vielfalt der möglichen Schaltstellungskombinationen erhöht.

Zweckmäßige Ausgestaltungen der Erfindung sind in den Unteransprüchen angegeben.

Nachstehend wird ein Ausführungsbeispiel der Erfindung anhand der Zeichnung im Einzelnen erläutert. Es zeigen:
- Figur 1: eine erfindungsgemäße Werkzeugmaschine mit einem auf vier Gänge ausgelegten Planetengetriebe im Längsschnitt in Teildarstellung, wobei sich das Getriebe im ersten Gang befindet,
- Figur 2a: das Hohlrad der eingangsseitigen Getriebestufe mit zugeordnetem Stellelement im der Figur 1 entsprechenden ersten Gang in Draufsicht gemäß Pfeil I in Figur 1,
- Figur 2b: das Hohlrad der ausgangsseitigen Getriebestufe mit zugeordnetem Stellelement im der Figur 1 entsprechenden ersten Gang in Unteransicht gemäß Pfeil II in Figur 1,
- Figur 3a: die Anordnung nach Figur 2a, nachdem in den zweiten Gang geschaltet worden ist,
- Figur 3b: die Anordnung nach Figur 2b, nachdem in den zweiten Gang geschaltet worden ist,
- Figur 4a: die Anordnung nach Figur 3a, nach dem Weiterschalten in den dritten Gang,
- Figur 4b: die Anordnung nach Figur 3b, nach dem Weiterschalten in den dritten Gang,
- Figur 5a: die Anordnung nach Figur 4a, nach dem Weiterschalten in den vierten Gang und
- Figur 5b: die Anordnung nach Figur 4b, nach dem Weiterschalten in den vierten Gang.

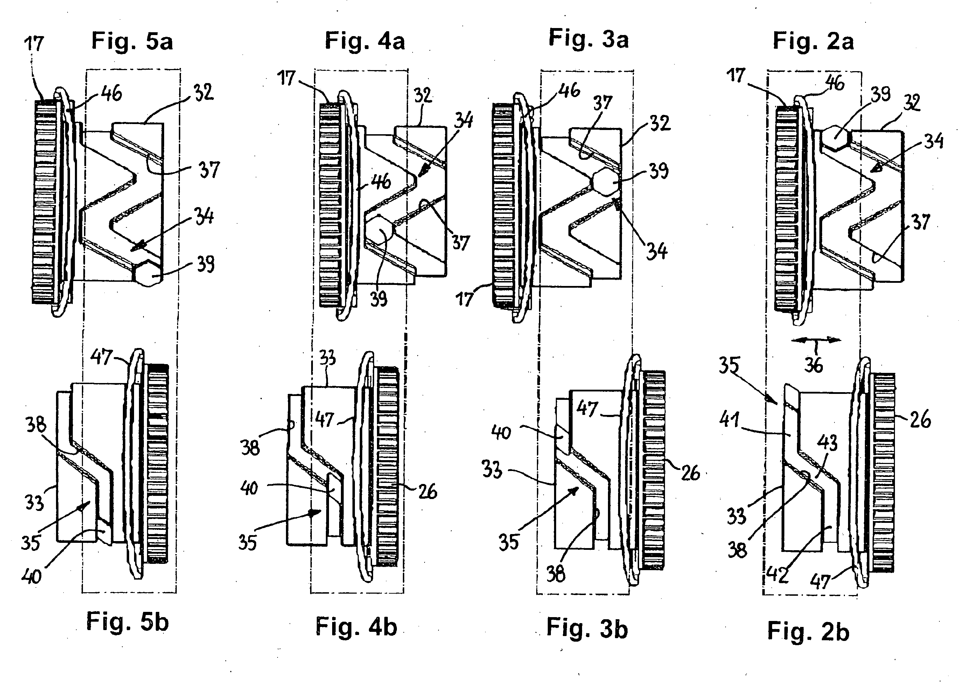

In den Figuren 2, 3, 4 und 5 sind die jeweilige Figur a und die jeweilige Figur b übereinander zusammen mit einem strichpunktierten, über die Figur a und die Figur b gehenden Referenzrechteck gezeichnet, so dass die axiale Lage der Stellelemente und Hohlräder in den verschiedenen Gängen durch einen Vergleich mit dem Referenzrechteck ersichtlich ist.

Ferner wird mit Bezug auf die Zeichnung darauf hingewiesen, dass in den Figuren 2 bis 5 außerdem die beiden jeweils einem der Stellelemente zugeordneten Führungsvorsprünge des Betätigungsrings eingezeichnet sind.

Bei der aus der Zeichnung hervorgehenden Werkzeugmaschine 1 handelt es sich um eine Handwerkzeugmaschine in Gestalt eines Akkuschraubers, der durch ein geeignetes Spannfutter ergänzt und dann auch als Bohrmaschine verwendet werden kann. Anstelle eines Akkugerätes könnte es sich jedoch auch um eine mittels eines Anschlusskabels an ein Stromnetz anschließbare oder um eine pneumatisch betriebene Maschine handeln. Die Werkzeugmaschine 1 weist einen pistolenartig abstehenden, abgeschnitten gezeichneten Handgriff 2 mit einem vom Benutzer mit einem Finger zu betätigenden Schaltelement 3 an der Vorderseite des Handgriffs 2 zum Ein- und Ausschalten eines im Handgriff 2 untergebrachten elektrischen Schalters auf, der die Stromzufuhr zu einem elektrischen Antriebsmotor 5 beherrscht. Die Akkueinheit ist im abgeschnittenen Bereich des Handgriffs 2 angeordnet.

Der Handgriff 2 steht von einer Antriebseinheit 5 der Werkzeugmaschine 1 ab, die ein Getriebe 6 in Gestalt eines Planetengetriebes enthält, das zwischen einer vom Antriebsmotor 4 her angetriebenen Eingangswelle 7 und einer zur Eingangswelle 7 koaxialen Ausgangswelle 8 angeordnet ist. Die Ausgangswelle 8 verläuft durch eine Halspartie 9 der Antriebseinheit 5 und steht mit ihrem Endbereich 8a vor die Halspartie 9 vor und kann eine von ihrer Stirnseite ausgehende, nicht weiter dargestellte Werkzeugaufnahme insbesondere mit mehrkantigem Querschnitt aufweisen, in die ein Schraubendreherbit oder ein sonstiges Werkzeugbit eingesetzt werden kann.

Die Maschine kann auch, wie bereits erwähnt, als Bohrmaschine oder dergleichen verwendet werden. Hierzu könnte man in die entsprechend angepasste Werkzeugaufnahme der Ausgangswelle 8 einen Bohrer einsetzen. Man könnte jedoch auch an der Vorderseite der Antriebseinheit 5 ein mit der Ausgangswelle 8 drehfest verbundenes Spannfutter für den Bohrer oder ein sonstiges rotierendes Werkzeug anbringen.

Es versteht sich, dass die Ausgangswelle 8 in geeigneter Weise drehgelagert ist.

Die Eingangswelle 7 kann von der Motorwelle des Antriebsmotors 4 gebildet oder von dieser her angetrieben werden.

Bei dem Getriebe 6 handelt es sich um ein zweistufiges Planetengetriebe, das zwei in axialer Richtung hintereinander angeordnete Planeten-Getriebestufen A und B aufweist. Das Getriebe 6 ist in einem Getriebegehäuse angeordnet, das ein das Getriebe 6 umschließendes Getriebegehäuseteil 10 zylindrischer Gestalt aufweist.

Die der Eingangswelle 7 zugewandte eingangsseitige Getriebestufe A enthält zwei koaxial zueinander angeordnete, jeweils eine Außenverzahnung aufweisende Sonnenräder 11, 12, die drehfest, zweckmäßigerweise einstückig, miteinander verbunden sind und einen unterschiedlichen Durchmesser aufweisen. Die beiden Sonnenräder 11, 12 sind koaxial zur Eingangswelle 7 angeordnet und drehfest mit dieser verbunden. Beim Ausführungsbeispiel sind die beiden Sonnenräder 11, 12 unmittelbar an die Eingangswelle 7 angesetzt.

Zweckmäßigerweise ist von den beiden Sonnenrädern 11, 12 das größeren Durchmesser aufweisende Sonnenrad 11 der Eingangswelle 7 zugewandt.

Die eingangsseitige Getriebestufe A enthält des Weiteren zwei in axialer Richtung hintereinander angeordnete Sätze 13, 14 von eine Außenverzahnung aufweisenden Planetenrädern 15 bzw. 16, von denen der Planetenradsatz 13 dem der Eingangswelle 7 zugewandten Sonnenrad 11 und der Planetenradsatz 14 dem anderen Sonnenrad 12 der eingangsseitigen Getriebestufe A zugeordnet ist. Die beiden Planetenradsätze 13, 14 bestehen jeweils aus mehreren, zweckmäßigerweise drei, über den Umfang verteilt angeordneten Planetenrädern 15 bzw. 16. Die Planetenräder 15 des Planetenradsatzes 13 kämmen mit dem der Eingangswelle 7 zugewandten Sonnenrad 11, die Planetenräder 16 des Planetenradsatzes 14 kämmen mit dem anderen Sonnenrad 12.

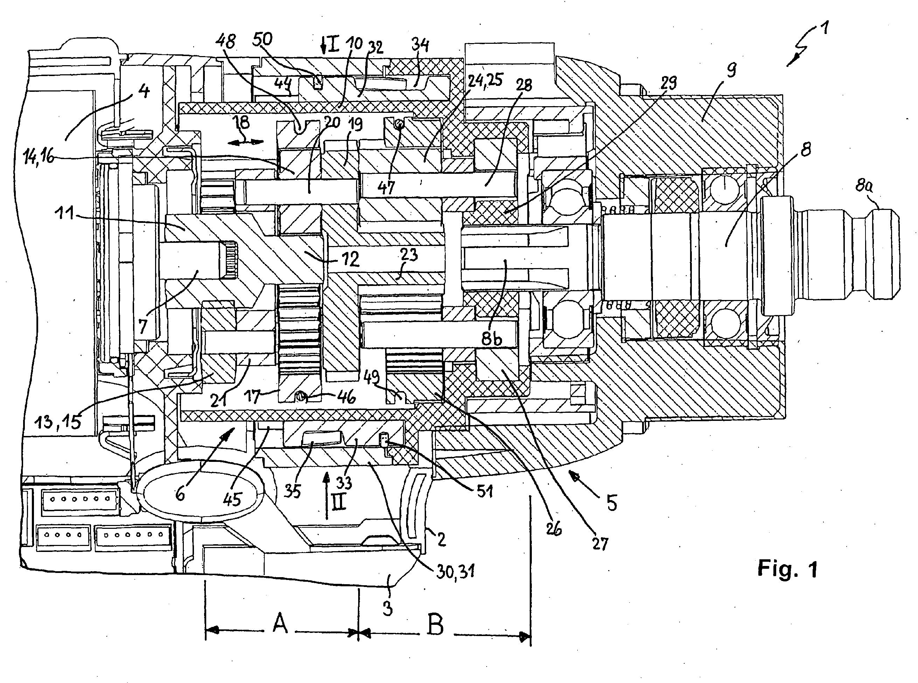

Zur eingangsseitigen Getriebestufe A gehört ferner ein innenverzahntes Hohlrad 17, das beiden Planetenradsätzen 13, 14 zugeordnet und in axialer Richtung gemäß Doppelpfeil 18 zwischen zwei Schaltstellungen hin und her bewegbar gelagert ist. Hierzu kann das Hohlrad 17 beispielsweise mit einer sich in axialer Richtung erstreckenden, gehäusefesten Führungsleiste in Führungseingriff stehen. Dabei ist das Hohlrad 17 drehfest angeordnet. In der in Figur 1 dargestellten Schaltstellung umschließt das Hohlrad 17 die Planetenräder 16 des Planetenradsatzes 14, so dass die Planetenräder 16 in radialer Richtung zwischen dem innen angeordneten Sonnenrad 12 kleineren Durchmessers und dem außen angeordneten Hohlrad 17 angeordnet sind und einerseits mit dem Sonnenrad 12 und andererseits mit dem Hohlrad 17 kämmen.

In seiner anderen nicht dargestellten Schaltstellung umschließt das Hohlrad 17 die Planetenräder 15 des dem größeren Sonnenrad 11 zugeordneten Planetenradsatzes 13, so dass in dieser Schaltstellung die Planetenräder 15 in radialer Richtung zwischen dem innen angeordneten Sonnenrad 11 größeren Durchmessers und dem außen angeordneten Hohlrad 17 angeordnet sind und einerseits mit dem Sonnenrad 11 und andererseits mit dem Hohlrad 17 kämmen.

Zur eingangsseitigen Getriebestufe A gehört ferner ein zu den Sonnenrädern 11, 12 und dem Hohlrad 17 koaxialer Planetenträger 19, der an der der ausgangsseitigen Getriebestufe B zugewandten Seite der eingangsseitigen Getriebestufe A angeordnet ist. Von dem Planetenträger 19 steht ein Satz von in Umfangsrichtung verteilt angeordneten Lagerstiften 20 zur Seite des Planetenradsatzes 14 hin ab, die feststehend am Planetenträger 19 angeordnet und auf denen die Planetenräder 16 des zugewandten Planetenradsatzes 14 drehbar gelagert sind. Die Lagerstifte 20 durchgreifen die Planetenräder 16 und sind mit ihrem dem Planetenträger 19 entgegengesetzten Endbereich mit einem Tragring 21 verbunden, der zwischen den beiden Planetenradsätzen 13, 14 angeordnet ist.

Die Planetenräder 15 des eingangsseitigen Planetenradsatzes 13 sind auf Lagerstiften 22 drehbar gelagert, die vor die Planetenräder 15 vorstehen und ebenfalls, von der entgegengesetzten Seite her, mit dem Tragring 21 verbunden sind.

Je nach dem, auf welchem der beiden Planetenradsätze 13, 14 das Hohlrad 17 sitzt, erhält man am Planetenträger 19 und somit auch an der Ausgangswelle 8 eine andere Drehzahl. Der jeweils vom Hohlrad 17 freie Planetenradsatz, in Figur 1 der Planetenradsatz 13, wird ohne weitere Wirkung über die seine Planetenräder 15 lagernden Lagerstifte 20 mitgenommen.

Die der Ausgangswelle 8 zugewandte ausgangsseitige Getriebestufe B weist ein drehfest, zweckmäßigerweise einstückig mit dem Planetenträger 19 der eingangsseitigen Getriebestufe A verbundenes Sonnenrad 23 mit einer Außenverzahnung auf, das somit von dem Planetenträger 19 angetrieben wird. Dem Sonnenrad 23 der ausgangsseitigen Getriebestufe B ist ein Planetenradsatz 24 zugeordnet, der von mehreren, zweckmäßigerweise drei über den Umfang verteilt angeordneten, außen verzahnten Planetenrädern 25 gebildet wird. Die Planetenräder 25 kämmen mit dem Sonnenrad 23. Der Planetenradsatz 24 wird von einem innenverzahnten und mit den Planetenrädern 25 in Eingriff stehenden Hohlrad 26 umschlossen, das koaxial zum Sonnenrad 23 angeordnet ist.

Zur ausgangsseitigen Getriebestufe B gehört ferner ein zum Sonnenrad 23 und dem Hohlrad 26 koaxialer Planetenträger 27, der an der der eingangsseitigen Getriebestufe A abgewandten Seite des Planetenradsatzes 24 der ausgangsseitigen Getriebestufe B angeordnet ist. Vom Planetenträger 27 steht ein Satz von den Planetenrädern 25 entsprechend über den Umfang verteilten, feststehend am Planetenträger 27 angeordneten Lagerstiften 28 ab, die zur Seite der Planetenräder 25 hin abstehen und zur drehbaren Lagerung der Planetenräder 25 dienen.

Der Planetenradsatz 24 der ausgangsseitigen Getriebestufe B ist in axialer Richtung dem Planetenträger 19 der eingangsseitigen Getriebestufe A unmittelbar benachbart.

Das Hohlrad 26 der ausgangsseitigen Getriebestufe B ist in axialer Richtung zwischen einer drehfest mit dem Getriebegehäuse verbundenen wirksamen Schaltstellung, die in Figur 1 dargestellt ist, und einer vom Getriebegehäuse freien, teilweise auf den Planetenträger 19 der eingangsseitigen Getriebestufe A verlagerten unwirksamen Schaltstellung verlagerbar. Diese unwirksame Schaltstellung des Hohlrades 26 befindet sich in Figur 1 links von der dargestellten wirksamen Schaltstellung. In der nach links verschobenen unwirksamen Schaltstellung steht das Hohlrad 26 der ausgangsseitigen Getriebestufe B sowohl mit dem Planetenträger 19 der eingangsseitigen Getriebestufe A als auch mit dem Planetenradsatz 24 der ausgangsseitigen Getriebestufe B in Eingriff, so dass der Planetenträger 19 und der Planetenradsatz 24 über das Hohlrad 26 drehfest miteinander verbunden sind. Dabei ist das Hohlrad 26 in dieser Schaltstellung drehfrei gelagert. Auf diese Weise erhält man an der ausgangsseitigen Getriebestufe B ein Übersetzungsverhältnis gleich eins, so dass die ausgangsseitige Getriebestufe B sozusagen unwirksam ist.

In der dargestellten wirksamen Schaltstellung des Hohlrades 26 steht dieses in axialem Schiebeeingriff mit dem Getriebegehäuseteil 10. Dieser axiale Schiebeeingriff ist der Übersichtlichkeit wegen nicht eingezeichnet. Es kann sich um einen vom Getriebegehäuse zum Hohlrad 26 vorstehenden Arretiervorsprung handeln, der in eine entsprechende Arretierausnehmung des Hohlrades 26 eingreift. Beim Verschieben des Hohlrades 26 nach links in seine unwirksame Schaltstellung kommt die Arretierausnehmung von dem Arretiervorsprung frei.

Damit das innenverzahnte Hohlrad 26 bei seinem Verschieben in die unwirksame Schaltstellung in drehfestem Eingriff mit dem Planetenträger 19 gelangen kann, kann dieser eine entsprechende Außenverzahnung aufweisen.

In der wirksamen Schaltstellung des Hohlrades 26 erhält man in der ausgangsseitigen Getriebestufe B eine Drehzahlübersetzung.

Der Planetenträge 27 der ausgangsseitigen Getriebestufe B ist drehfest mit der Ausgangswelle 8 verbunden. Dabei ist beim dargestellten Ausführungsbeispiel zwischen dem Planetenträger 27 und der Ausgangswelle 8 noch eine sogenannte Spindelstoppeinrichtung angeordnet, die bei stillstehendem Motor die Abtriebswelle 8 in der Antriebsrichtung entgegengesetzter Drehrichtung feststellt, so dass ein in Schraubverbindung mit der Ausgangswelle 8 stehendes Spannfutter abgeschraubt werden kann. Diese Spindelstoppeinrichtung interessiert vorliegend nicht weiter. Daher wird des Verständnisses der Zeichnung wegen nur darauf hingewiesen, dass auf dem der ausgangsseitigen Getriebestufe B zugewandten inneren Endbereich 8b der Ausgangswelle 8 ein Mitnahmering 29 drehfest angeordnet ist, der seinerseits in Mitnahmeverbindung mit dem Planetenträger 27 der ausgangsseitigen Getriebestufe B steht.

Das beschriebene Getriebe 6 wird als schaltbares Vierganggetriebe mit unterschiedlichen Drehzahlen der Ausgangswelle 8 in den vier Gängen betrieben, indem sowohl in der wirksamen als auch in der unwirksamen Schaltstellung des Hohlrades 26 der ausgangsseitigen Getriebestufe B das Hohlrad 17 der eingangsseitigen Getriebestufe A entweder seine auf dem Planetenradsatz 14 (dargestellt) oder seine auf dem Planetenradsatz 13 sitzende Schaltstellung einnehmen kann.

Im ersten Gang, in dem die Drehzahl der Ausgangswelle 8 am kleinsten ist, sitzt das in seinen beiden Schaltstellungen drehfest gelagerte Hohlrad 17 der eingangsseitigen Getriebestufe A, wie dargestellt, auf dem dem kleineren Sonnenrad 12 zugeordneten Planetenradsatz 14 und das Hohlrad 26 der ausgangsseitigen Getriebestufe B befindet sich in seiner dargestellten wirksamen Schaltstellung, in der es drehfest angeordnet ist und auf dem Planetenradsatz 24 sitzt.

Im zweiten Gang, in dem die Drehzahl der Ausgangswelle 9 grö-βer als im ersten Gang ist, ist das Hohlrad 17 der eingangsseitigen Getriebestufe A in seine auf dem dem größeren Sonnenrad 11 zugeordneten Planetenradsatz 13 befindliche Schaltstellung verschoben. Das Hohlrad 26 der ausgangsseitigen Getriebestufe B bleibt mit Bezug auf den ersten Gang unverändert in seiner dargestellten wirksamen Schaltstellung.

Im dritten Gang, in dem die Drehzahl der Ausgangswelle 8 größer als im zweiten Gang ist, befindet sich das Hohlrad 17 der eingangsseitigen Getriebestufe A wieder auf dem Planetenradsatz 14, der auf dem kleineren Sonnenrad 12 sitzt (dargestellte Schaltstellung des Hohlrads 17). Ferner ist das Hohlrad 26 der ausgangsseitigen Getriebestufe B in Figur 1 nach links in seine den Planetenträger 19 der eingangsseitigen Getriebestufe A mit dem Planetenradsatz 24 verbindende unwirksame Schaltstellung verstellt, so dass an der ausgangsseitigen Getriebestufe B keine Drehzahlübersetzung stattfindet.

Im vierten Gang schließlich, in dem die Drehzahl der Ausgangswelle 8 größer als im dritten Gang ist, ist das Hohlrad 17 der eingangsseitigen Getriebestufe A wie im zweiten Gang auf den dem größeren Sonnenrad 11 zugeordneten Planetenradsatz 13 verschoben. Das Hohlrad 26 der ausgangsseitigen Getriebestufe B bleibt wie im dritten Gang in seiner unwirksamen Schaltstellung.

Bei einem Getriebe der beschriebenen Art lassen sich durch geeignete Dimensionierung der verschiedenen Zahnräder (Sonnenräder, Planetenräder, Hohlräder) verhältnismäßig große Drehzahlunterschiede zwischen den Gängen erreichen. Zweckmä-βigerweise entspricht die Drehzahl im zweiten, dritten und vierten Gang jeweils der Drehzahl des benachbarten kleineren Gangs multipliziert mit einem Faktor im Bereich von etwa 1,8 bis 2,5.

Bei einer für die Praxis vorgesehenen Maschine liegt die Drehzahl im ersten Gang im Bereich von etwa 430, im zweiten Gang im Bereich von etwa 900, im dritten Gang im Bereich von etwa 2100 und im vierten Gang im Bereich von etwa 4100 Umdrehungen pro Minute.

In jedem Gang ergibt sich also eine andere Kombination der möglichen Schaltstellungen der beiden Hohlräder 17, 26.

Nachstehend wird nun die Einrichtung zum Schalten des Getriebes beschrieben:

Außen an der Werkzeugmaschine 1 ist am Maschinengehäuse, das an dieser Stelle gleichzeitig das Getriebegehäuse bilden kann, eine Betätigungseinrichtung 30 angeordnet, die in den einzelnen Gängen zugeordnete Gangstellungen bewegbar ist. Die Betätigungseinrichtung 30 wird von einem zu den Hohlrädern 17, 26 koaxialen, am Maschinengehäuse verdrehbar gelagerten, in axialer Richtung feststehenden Betätigungsring 31 gebildet, der zum Schalten vom Benutzer ergriffen und in die dem gewünschten Gang entsprechende Gangstellung verdreht wird.

Zwischen dem Betätigungsring 31 und den Hohlrädern 17, 26 des Getriebes 6 ist eine im Einzelnen noch zu beschreibende Kopplungseinrichtung angeordnet, so dass sich beim Verdrehen des Betätigungsrings in eine andere Gangstellung an den beiden Hohlrädern 17, 26 die Schaltstellungskombination des anderen Ganges ergibt.

Die Kopplungseinrichtung enthält zwei jeweils einem der Hohlräder 17, 26 zugeordnete und mit dem jeweiligen Hohlrad 17, 26 in axial gerichteter Mitnahmeverbindung stehende Stellelemente 32, 33. Dabei sind die Stellelemente 32, 33 jeweils für sich in axialer Richtung gemäß Doppelpfeil 36 (siehe Figur 2a) verschiebbar gelagert. Der Betätigungsring 31 ist mit den Stellelementen 32, 33 über jeweils eine gesonderte Kulissenführung 34, 35 verbunden, die die axial gerichtete Bewegung der Stellelemente 32, 33 in Abhängigkeit von der Drehbewegung des Betätigungsrings 31 steuert. Dabei sind die Kulissenführungen 34, 35 so ausgestaltet, dass die Stellelemente 32, 33 in der einem jeweiligen Gang zugeordneten Drehstellung (Gangstellung) des Betätigungsrings 31 eine Position einnehmen, die der dem betreffenden Gang zugeordneten Schaltstellungskombination entspricht.

Die dem Hohlrad 17 der eingangsseitigen Getriebestufe A zugeordnete Kulissenführung 34 ist also so ausgestaltet, dass das betreffende Stellelement 32 in der dem ersten Gang zugeordneten Gangstellung des Betätigungsrings 31 und in der dem dritten Gang zugeordneten Gangstellung des Betätigungsrings 31 eine gleiche, aus den Figuren 2a und 4a hervorgehende Axiallage einnimmt, die der aus Figur 1 hervorgehenden Schaltstellung des Hohlrades 17 entspricht, und in der dem zweiten Gang zugeordneten Gangstellung des Betätigungsrings 31 und in der dem vierten Gang zugeordneten Gangstellung des Betätigungsrings 31 eine gleiche, aus den Figuren 3a und 5a hervorgehende Axiallage einnimmt, die der in Figur 1 nach links zum auf dem größeren Sonnenrad 11 sitzenden Planetenradsatz 13 bewegten Schaltstellung des Hohlrades 17 entspricht.

Ferner ist die dem Hohlrad 26 der ausgangsseitigen Getriebestufe B zugeordnete Kulissenführung 35 so ausgestaltet, dass das betreffende Stellelement 33 in der dem ersten Gang zugeordneten Gangstellung des Betätigungsrings 31 und in der dem zweiten Gang zugeordneten Gangstellung des Betätigungsrings 31 eine gleiche, aus den Figuren 2b und 3b hervorgehende Axiallage einnimmt, die der aus Figur 1 hervorgehenden wirksamen Schaltstellung des Hohlrades 26 entspricht, und in der dem dritten Gang zugeordneten Gangstellung des Betätigungsrings 31 und in der dem vierten Gang zugeordneten Gangstellung des Betätigungsrings 31 eine gleiche, aus den Figuren 4b und 5b hervorgehende Axiallage einnimmt, die der in Figur 1 nach links bewegten unwirksamen Schaltstellung des Hohlrades 26 entspricht.

Jede der beiden Kulissenführungen 34, 35 wird von einer Kulissennut 37, 38 im betreffenden Stellelement 32, 33 und einem am Betätigungsring 31 angeordneten, in die Kulissennut 37, 38 eingreifenden und in dieser nach Art eines Nutensteins geführten Führungselement 39, 40 gebildet. Die beiden Führungselemente 39, 40 erscheinen in der Schnittdarstellung gemäß Figur 1 nicht. Sie sind jedoch in den Figuren 2 bis 5 eingezeichnet.

Der Verlauf der Kulissennuten 37, 38 kann unterschiedlich ausgebildet sein. Wesentlich ist, dass sich das jeweilige Stellelement 32, 33 beim Verdrehen des Betätigungsrings 31 in die vier Gangstellungen in zwei Axiallagen einstellen kann.

Aus den Figuren 2a bis 5a ist ersichtlich, dass die Kulissennut 37 des Stellelements 32 einen schräg hin und her gehenden Verlauf nimmt, wobei sich das zugehörige Führungselement 39 des Betätigungsrings 31 in jedem Gang in einer der beiden Scheitelpunkte der hin und her gehenden Kulissennut 37 befindet.

Die Kulissennut 38 des dem Hohlrad 26 zugeordneten Stellelements 33 weist dagegen zwei sich in Umfangsrichtung erstreckende, in axialer Richtung mit Abstand zueinander angeordnete Nutbereiche 41, 42 auf, die an einem schräg verlaufenden Übergangsbereich 43 ineinander übergehen. Das Führungselement 40 befindet sich im ersten und zweiten Gang im einen und im dritten und vierten Gang im anderen der beiden in Umfangsrichtung verlaufenden Nutbereiche 41, 42.

Die beiden Stellelemente 32, 33 sind diametral zueinander angeordnet. Dabei weisen sie zweckmäßigerweise eine plattenartige, im zur Figur 1 rechtwinkeligen Querschnitt kreisbogenförmige Gestalt auf.

Wie bereits erwähnt, wird das beschriebene Planetengetriebe 6 von einem zylindrische Gestalt aufweisenden Getriebegehäuseteil 10 umschlossen. Die beiden Stellelemente 32, 33 befinden sich im Zwischenraum zwischen dem Getriebegehäuseteil 10 und dem Betätigungsring 31. Dabei sind sich die Stellelemente 32, 33 und der Betätigungsring 31 unmittelbar benachbart, so dass die am Betätigungsring 31 nach innen hin vorstehend angeordneten Führungselemente 29, 40 in die außen an den Stellelementen 32, 33 angeordneten Kulissennuten 37, 38 eingreifen können.

Die im Querschnitt kreisbogenförmige Gestalt der Stellelemente 32, 33 entspricht der zylindrischen Gestalt des Getriebegehäuseteils 10, so dass die Stellelemente 32, 33 flächig am Getriebegehäuseteil 10 anliegen.

Zur axial gerichteten Führung der Stellelemente 32, 33 können außen am Getriebegehäuseteil 10 axial verlaufende Führungsrippen 44, 45 angesetzt sein, die in entsprechende Führungsnuten der Stellelemente 32, 33 eingreifen.

Das Stellelement 32 steht mit dem Hohlrad 17 und das Stellelement 33 mit dem Hohlrad 26 in axialer Richtung in Mitnahmeverbindung. Diese Mitnahmeverbindung erfolgt zweckmäßigerweise durch das Getriebegehäuseteil 10 hindurch, das hierzu geeignete Ausnehmungen aufweist.

Dabei können die Stellelemente 32, 33 jeweils über einen einerseits am Stellelement 32 bzw. 33 und andererseits am betreffenden Hohlrad 17 bzw. 26 angreifenden Federbügel 46 bzw. 47 mit dem betreffenden Hohlrad in axialer Mitnahmeverbindung stehen. Die Federbügel 46, 47 bestehen zweckmäßigerweise aus drahtförmigem Material. Sie verlaufen jeweils in einer Ringnut 48 bzw. 49 des betreffenden Hohlrads 17 bzw. 26, durchgreifen das Getriebegehäuseteil 10 und sind endseitig bei 50 bzw. 51 am zugehörigen Stellelement 32 bzw. 33 festgelegt.

Es versteht sich, dass das beschriebene Gangschaltungsprinzip auch für Getriebe mit einer anderen Gangzahl eingesetzt werden kann. Ferner ist es prinzipiell möglich, nicht nur zwei sondern mehr als zwei kulissengeführte Stellelemente vorzusehen, so dass dementsprechend mehr als zwei Hohlräder gesteuert werden können.

## Patentansprüche

1. Werkzeugmaschine, insbesondere Handwerkzeugmaschine, beispielsweise Akkuschrauber oder Handbohrmaschine, mit einer motorisch angetriebenen Eingangswelle und einer Ausgangswelle, zwischen denen ein in mehrere Gänge schaltbares, mehrstufiges Planetengetriebe mit mindestens zwei in axialer Richtung hintereinander angeordneten, in axialer Richtung zwischen Schaltstellungen hin und her bewegbar gelagerten Hohlrädern angeordnet ist, wobei den Gängen unterschiedliche Schaltstellungskombinationen der Hohlräder zugeordnet sind, einer außen an der Werkzeugmaschine angeordneten Betätigungseinrichtung, die in den verschiedenen Gängen zugeordnete Gangstellungen bewegbar ist, und einer Kopplungseinrichtung zwischen der Betätigungseinrichtung und den Hohlrädern, so dass sich beim Bewegen der Betätigungseinrichtung in eine andere Gangstellung an den Hohlrädern die Schaltstellungskombination des anderen Ganges ergibt, wobei die Betätigungseinrichtung (30) von einem zu den Hohlrädern (17, 26) koaxialen, verdrehbar gelagerten Betätigungsring (31) gebildet wird und die Kopplungseinrichtung mehrere voneinander gesonderte, in axialer Richtung verschiebbar gelagerte und jeweils einem Hohlrad (17, 26) zugeordnete und mit diesem in axial gerichteter Mitnahmeverbindung stehende Stellelemente (32, 33) enthält, wobei der Betätigungsring (31) mit den Stellelementen (32, 33) über jeweils eine die axial gerichtete Bewegung der Stellelemente (32, 33) in Abhängigkeit von der Drehbewegung des Betätigungsrings (31) steuernde Kulissenführung (34, 35) verbunden ist, so dass die Stellelemente (32, 33) in der einem jeweiligen Gang zugeordneten Drehstellung des Betätigungsrings (31) eine der dem betreffenden Gang zugeordneten Schaltstellungskombination der Hohlräder (17, 26) entsprechende Position einnehmen, **dadurch gekennzeichnet, dass** die Stellelemente (32, 33) jeweils über einen einerseits am Stellelement (32 bzw. 33) und andererseits am betreffenden Hohlrad (17 bzw. 26) angreifenden Federbügel (46 bzw. 47) mit dem betreffenden Hohlrad in axialer Mitnahmeverbindung stehen.

2. Werkzeugmaschine nach Anspruch 1, **dadurch gekennzeichnet, dass** die Kulissenführungen (34, 35) jeweils von einer Kulissennut (37, 38) im betreffenden Stellelement (32, 33) und einem am Betätigungsring (31) angeordneten, in die Kulissennut (37, 38) eingreifenden und in dieser geführten Führungselement (39, 40) gebildet werden.

3. Werkzeugmaschine nach Anspruch 1 oder 2, **dadurch gekennzeichnet**, zwei diametral zueinander angeordnete Stellelemente (32, 33) vorhanden sind

4. Werkzeugmaschine nach einem der Ansprüche 1 bis 3, **dadurch gekennzeichnet, dass** die Stellelemente (32, 33) eine plattenartige, im Querschnitt kreisbogenförmige Gestalt aufweisen.

5. Werkzeugmaschine nach einem der Ansprüche 1 bis 4, **dadurch gekennzeichnet, dass** das Planetengetriebe (6) in einem Getriebegehäuseteil (10) untergebracht ist und die Stellelemente (32, 33) außen am Getriebegehäuseteil (10) angeordnet sind, wobei die Stellelemente (32, 33) durch das Getriebegehäuseteil (10) hindurch in Mitnahmeverbindung mit den Hohlrädern (17, 26) stehen.

## Claims

1. Machine tool, in particular a hand tool, for example a cordless screwdriver or hand drill, with a motor-driven input shaft and an output shaft, between which is mounted a multi-stage planetary gear capable of switching into several gears and with at least two internal gears, mounted axially one behind the other and able to move axially to and fro between operating positions, wherein the gears are assigned different operating position combinations of the internal gears, an actuating device located on the outside of the machine tool which is able to move into the gear positions assigned to the various gears, and a coupling device between the actuating device and the internal gears, so that on movement of the actuating device into another gear position, the operating position combination of the other gear is provided at the internal gears, wherein the actuating device (30) is formed by a rotatably mounted actuating ring (31) coaxial to the internal gears (17, 26) and the coupling device contains several positioning elements (32, 33), separate from one another, mounted slidably in the axial direction, each assigned to an internal gear (17, 26) with which they are in axially aligned driving connection, wherein the actuating ring (31) is connected to the positioning elements (32, 33) in each case via a gate guide (34, 35) controlling the axially aligned movement of the positioning elements (32, 33) depending on the rotary movement of the actuating ring (31), so that the positioning elements (32, 33) in the rotary position of the actuating ring (31) assigned to a particular gear adopt a position corresponding to the operating position combination of the internal gears (17, 26) assigned to the gear concerned, **characterised in that** each of the positioning elements (32, 33) is in axial driving connection with the relevant internal gear via a spring bracket (46 and 47 respectively) acting at one end on the positioning element (32 or 33) and at the other end on the internal gear (17 or 26) concerned.

2. Machine tool according to claim 1, **characterised in that** the gate guides (34, 35) are formed in each case by a gate slot (37, 38) in the positioning element (32, 33) concerned and a guide element (39, 40) located on the actuating ring (31) and engaging and guided in the gate slot (37, 38).

3. Machine tool according to claim 1 or 2, **characterised in that** two diametrically opposite positioning elements (32, 33) are provided.

4. Machine tool according to any of claims 1 to 3, **characterised in that** the positioning elements (32, 33) have a plate-like shape with a circular-arc-shaped cross-section.

5. Machine tool according to any of claims 1 to 4, **characterised in that** the planetary gear (6) is accommodated in a gearbox component (10) and the positioning elements (32, 33) are arranged on the outside of the gearbox component (10), wherein the positioning elements (32, 33) are in driving connection with the internal gears (17, 26) through the gearbox component (10).

## Revendications

1. Machine-outil, en particulier machine-outil à main, par exemple visseuse sans fil ou perceuse à main, avec un arbre d'entrée entraîné par un moteur et un arbre de sortie, entre lesquels est placé un réducteur planétaire à plusieurs niveaux pouvant être réglé sur plusieurs rapports avec au moins deux roues creuses disposées l'une après l'autre dans la direction axiale et montées mobiles en va et vient dans la direction axiale entre des positions de commutation, différentes combinaisons de positions de commutation des roues creuses étant associées aux rapports, avec un dispositif de commande placé à l'extérieur sur la machine-outil, qui peut être déplacé dans des positions de rapports associées aux différents rapports, et avec un dispositif de couplage entre le dispositif de commande et les roues creuses, de sorte que, lors du déplacement du dispositif de commande jusqu'à une autre position de rapport, on obtient sur les roues creuses la combinaison de positions de commutation de l'autre rapport, le dispositif de commande (30) étant formé par une bague d'actionnement (31) montée rotative et coaxiale par rapport aux roues creuses (17, 26) et le dispositif de couplage comprenant plusieurs éléments de manoeuvre (32, 33) séparés les uns des autres, montés mobiles dans la direction axiale et associés chacun à une roue creuse (17, 26) et en liaison d'entraînement avec celle-ci dans la direction axiale, la bague d'actionnement (31) étant reliée aux éléments de manoeuvre (32, 33) par l'intermédiaire d'un guidage à coulisse (34, 35) respectif commandant le mouvement axial des éléments de manoeuvre (32, 33) en fonction du mouvement de rotation de la bague d'actionnement (31), de sorte que, dans la position de rotation de la bague d'actionnement (31) associée à un rapport donné, les éléments de manoeuvre (32, 33) prennent une combinaison de positions de commutation des roues creuses (17, 26) associée au rapport concerné, **caractérisée en ce que** les éléments de manoeuvre (32, 33) sont en liaison d'entraînement axiale avec la roue creuse concernée par l'intermédiaire d'un arceau à ressort (46, resp. 47) se mettant en prise d'une part sur l'élément de manoeuvre (32, resp. 33) et d'autre part sur la roue creuse (17, resp. 26) concernée.

2. Machine-outil selon la revendication 1, **caractérisée en ce que** les guidages à coulisse (34, 35) sont formés chacun par une rainure de coulisse (37, 38) dans l'élément de manoeuvre (32, 33) correspondant et par un élément de guidage (32, 33) placé sur la bague d'actionnement (31), s'engageant dans la rainure de coulisse (37, 38) et guidé dans celle-ci.

3. Machine-outil selon la revendication 1 ou 2, **caractérisée en ce que** deux éléments de manoeuvre (32, 33) diamétralement opposés l'un à l'autre sont présents.

4. Machine-outil selon l'une des revendications 1 à 3, **caractérisée en ce que** les éléments de manoeuvre (32, 33) présentent une forme de type plaque, en arc de cercle en coupe transversale.

5. Machine-outil selon l'une des revendications 1 à 4, **caractérisée en ce que** le réducteur planétaire (6) est logé dans une partie de boîtier de réducteur (10) et les éléments de manoeuvre (32, 33) sont placés à l'extérieur sur la partie de boîtier de réducteur (10), les éléments de manoeuvre (32, 33) se trouvant en liaison d'entraînement avec les roues creuses (17, 26) à travers la partie de boîtier de réducteur (10).
